# EUROPEAN PATENT APPLICATION

(11) **EP 3 041 277 A1**
(43) Date of publication of application: **06.07.2016**
(21) Application number: 15200632.6
(22) Date of filing: 17.12.2015
(51) Int. Cl.: H04W 4/06, H04W 84/12, H04L 12/18, H04W 12/04, H04L 29/06

(54) **FRAME TRANSFER METHOD, RELATED APPARATUS, AND COMMUNICATIONS SYSTEM**

(30) Priority: 31.12.2014 CN 201410855654
(71) Applicant: Huawei Technologies Co., Ltd., Longgang District Shenzhen, Guangdong 518129 (CN)
(72) Inventor: TAO, Chengyi, 518129 Shenzhen (CN)
(74) Representative: Goddar, Heinz J.

(57) **Abstract**

A frame transfer method and a related apparatus and a communications system. The method includes: sending, by an access point to a wireless terminal associated with the access point, a group key of a virtual local area network to which the wireless terminal belongs; receiving, by the access point, a frame, where the frame is a broadcast frame of the virtual local area network or a multicast frame of the virtual local area network; encrypting, by the access point, the frame by using the group key of the virtual local area network, to obtain an encrypted frame; and sending, by the access point and in a wireless local area network of the access point, the encrypted frame. The technical solutions of the embodiments of the present invention help reduce complexity of implementing VLAN isolation between wireless terminals in a WLAN and reduce frame forwarding load of an AP.

## Description

### TECHNICAL FIELD

The present invention relates to the field of communications technologies, and in particular, to a frame transfer method, a related apparatus, and a communications system.

### BACKGROUND

A virtual local area network (English: virtual local area network, VLAN for short) may partition a physical local area network into several different broadcast domains, so as to facilitate traffic control.

In a wireless local area network (English: wireless local area network, WLAN for short), an access point (English: access point, AP for short) is a device that is able to provide access to a distribution service via a wireless medium (English: wireless medium) for a wireless terminal that associates the AP. That is, after the wireless terminal, as a station (English: station, STA for short), is associated with the AP, the wireless terminal can access a wired network. The AP forwards a frame between the wireless medium and a wired link.

In conventional implementation, after receiving a broadcast frame belonging to a VLAN from the wired network, the AP separately sends, in a unicast manner, the frame to each wireless terminal that belongs to the VLAN and is in the WLAN to which the AP belongs. The wireless terminal belonging to the VLAN refers to a wireless terminal that is logically grouped into the VLAN. If a quantity of wireless terminals, which belong to the VLAN, of wireless terminals associated with the AP is large, for example, 100, the AP needs to send the foregoing frame separately to the 100 wireless terminals by using 100 unicast frames, where another wireless terminal, which does not belong to the VLAN, of the wireless terminals associated with the AP does not receive the foregoing frame, so as to implement VLAN isolation between wireless terminals in the WLAN. The foregoing implementation of VLAN isolation between the wireless terminals in the WLAN is complex.

### SUMMARY

The present invention provide a frame transfer method, a related apparatus, and a communications system, to reduce complexity of implementing VLAN isolation between wireless terminals in a WLAN and reduce frame forwarding load of an AP.

A first aspect of the present invention provides a frame transfer method, including:
sending, by an access point to a wireless terminal associated with the access point, a group key of a virtual local area network to which the wireless terminal belongs;
receiving, by the access point, a frame, where the frame is a broadcast frame of the virtual local area network or a multicast frame of the virtual local area network;
encrypting, by the access point, the frame by using the group key of the virtual local area network, to obtain an encrypted frame; and
sending, by the access point and in a wireless local area network of the access point, the encrypted frame.

With reference to the first aspect, in a first possible implementation manner of the first aspect, the frame includes a virtual local area network identifier of the virtual local area network, where the encrypting the frame by using the group key of the virtual local area network, to obtain an encrypted frame includes: after the virtual local area network identifier is removed from the frame, encrypting the frame by using the group key, to obtain the encrypted frame.

With reference to the first aspect or the first possible implementation manner of the first aspect, in a second possible implementation manner of the first aspect,
the sending, to a wireless terminal associated with the access point, a group key of a virtual local area network to which the wireless terminal belongs includes: sending, to the wireless terminal by using a group key handshake message, the group key of the
virtual local area network to which the wireless terminal belongs.

With reference to any one of the first aspect, the first possible implementation manner of the first aspect, and the second possible implementation manner of the first aspect, in a third possible implementation manner of the first aspect,
there are multiple wireless terminals associated with the access point, and the multiple wireless terminals include the wireless terminal and another wireless terminal, where the wireless terminal and the another wireless terminal belong to different virtual local area networks, and the method further includes:
   sending, by the access point to the another wireless terminal associated with the access point, another group key of a virtual local area network to which the another wireless terminal belongs;
   receiving, by the access point, another frame, where the another frame is a broadcast frame of the virtual local area network to which the another wireless terminal belongs or a multicast frame of the virtual local area network to which the another wireless terminal belongs;
   encrypting, by the access point, the another frame by using the group key of the virtual local area network to which the another wireless terminal belongs, to obtain another encrypted frame; and
   sending, by the access point and in the wireless local area network of the access point, the another encrypted frame.

A second aspect of the present invention provides an access point, including:
a transceiver, configured to send, to a wireless terminal associated with the access point, a group key of a virtual local area network to which the wireless terminal belongs; and receive a frame, where the frame is a broadcast frame of the virtual local area network or a multicast frame of the virtual local area network; and
an encryption unit, configured to encrypt the frame by using the group key of the virtual local area network, to obtain an encrypted frame, where
the transceiver is further configured to send, in a wireless local area network of the access point, the encrypted frame.

With reference to the second aspect, in a first possible implementation manner of the second aspect,
the frame includes a virtual local area network identifier of the virtual local area network, where the encryption unit is specifically configured to: after the virtual local area network identifier is removed from the frame, encrypt the frame by using the group key, to obtain the encrypted frame.

With reference to the second aspect or the first possible implementation manner of the second aspect, in a second possible implementation manner of the second aspect,
in the aspect of sending, to a wireless terminal associated with the access point, a group key of a virtual local area network to which the wireless terminal belongs, the transceiver is specifically configured to send, to the wireless terminal by using a group key handshake message, the group key of the virtual local area network to which the wireless terminal belongs.

With reference to any one of the second aspect, the first possible implementation manner of the second aspect, and the second possible implementation manner of the second aspect, in a third possible implementation manner of the second aspect,
there are multiple wireless terminals associated with the access point, and the multiple wireless terminals include the wireless terminal and another wireless terminal, where the wireless terminal and the another wireless terminal belong to different virtual local area networks, and
the transceiver is further configured to send, to the another wireless terminal associated with the access point, another group key of a virtual local area network to which the another wireless terminal belongs; and receive another frame, where the another frame is a broadcast frame of the virtual local area network to which the another wireless terminal belongs or a multicast frame of the virtual local area network to which the another wireless terminal belongs;
the encryption unit is further configured to encrypt the another frame by using the group key of the virtual local area network to which the another wireless terminal belongs, to obtain another encrypted frame; and
the transceiver is further configured to send, in the wireless local area network of the access point, the another encrypted frame.

A third aspect of the present invention provides a communications system, including an access point and a wireless terminal, where the wireless terminal is associated with the access point, where
the access point is configured to send, to the wireless terminal, a group key of a virtual local area network to which the wireless terminal belongs; receive a frame, where the frame is a broadcast frame of the virtual local area network or a multicast frame of the virtual local area network; encrypt the frame by using the group key of the virtual local area network, to obtain an encrypted frame; and send, in a wireless local area network of the access point, the encrypted frame; and
the wireless terminal is configured to receive the group key sent by the access point; and receive the encrypted frame sent by the access point, and decrypt the encrypted frame by using the group key.

With reference to the third aspect, in a first possible implementation manner of the third aspect, the system further includes another wireless terminal, where the another wireless terminal is associated with the access point, and the wireless terminal and the another wireless terminal belong to different virtual local area networks;
the access point is further configured to send, to the another wireless terminal, another group key of a virtual local area network to which the another wireless terminal belongs; receive another frame, where the another frame is a broadcast frame of the virtual local area network to which the another wireless terminal belongs or a multicast frame of the virtual local area network to which the another wireless terminal belongs; encrypt the another frame by using the group key of the virtual local area network to which the another wireless terminal belongs, to obtain another encrypted frame; and send, in the wireless local area network to which the access point belongs, the another encrypted frame; and
the another wireless terminal is configured to receive the another group key sent by the access point; and receive the another encrypted frame sent by the access point, and decrypt the another encrypted frame by using the another group key.

It can be seen that, in the present invention, an AP first sends, to an associated wireless terminal, a group key of a VLAN to which the wireless terminal belongs; and when the AP receives a broadcast frame or a multicast frame of the VLAN, the AP encrypts the broadcast frame or the multicast frame by using the group key of the VLAN, to obtain an encrypted frame, and sends, in a WLAN to which the AP belongs, the encrypted frame. The AP sends, to wireless terminals in the WLAN, group keys of VLANs to which the wireless terminals belong, and different VLANs have different group keys; therefore, broadcast frame isolation or multicast frame isolation between the wireless terminals belonging to the different VLANs can also be successfully implemented even if the AP sends, in the WLAN, single encrypted frame that is obtained by encrypting by using the corresponding group key. That is, the foregoing solutions help reduce complexity of implementing VLAN isolation between the wireless terminals in the WLAN and help reduce frame forwarding load of the AP.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic flowchart of a frame transfer method according to an embodiment of the present invention;
FIG. 2 is a schematic flowchart of another frame transfer method according to an embodiment of the present invention;
FIG. 3-a is a schematic flowchart of another frame transfer method according to an embodiment of the present invention;

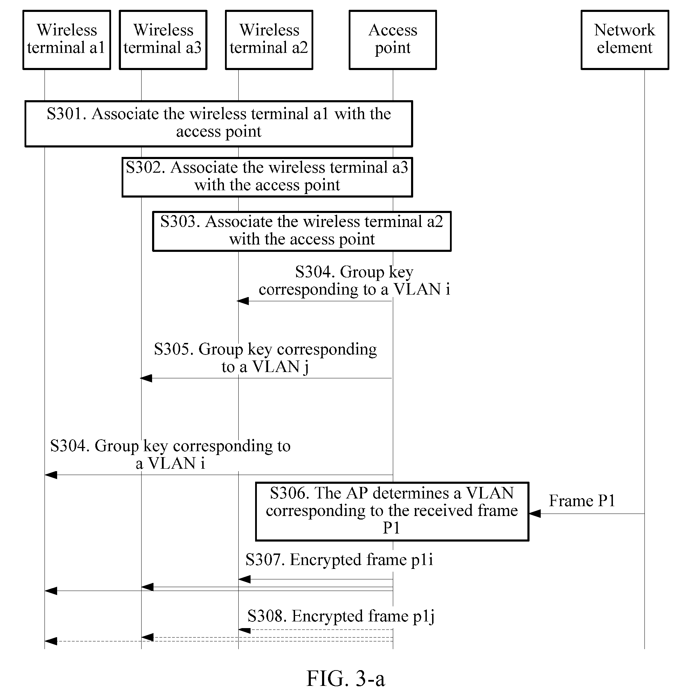

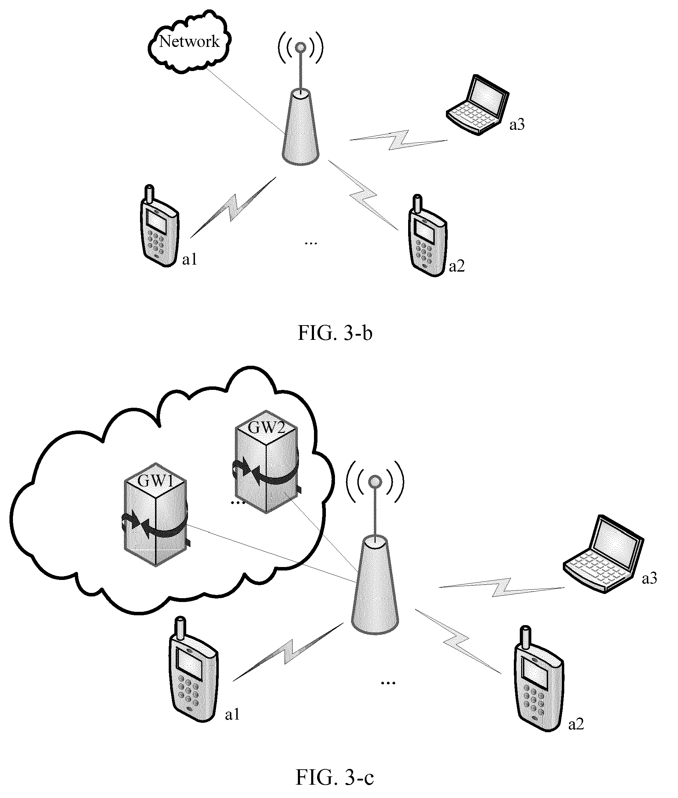

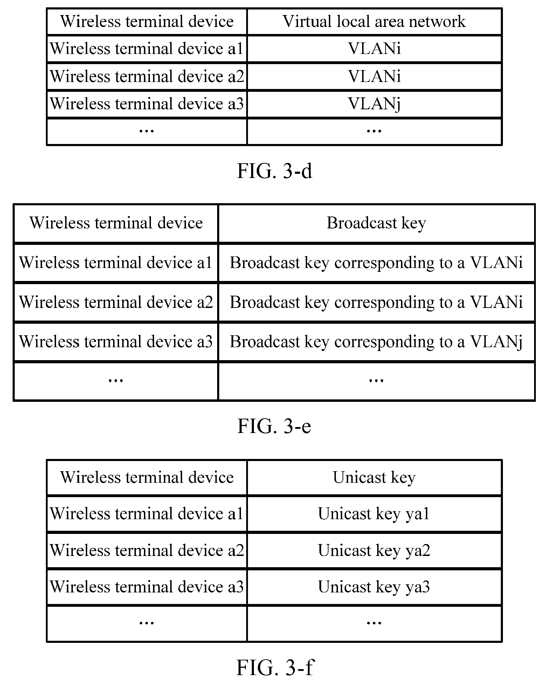

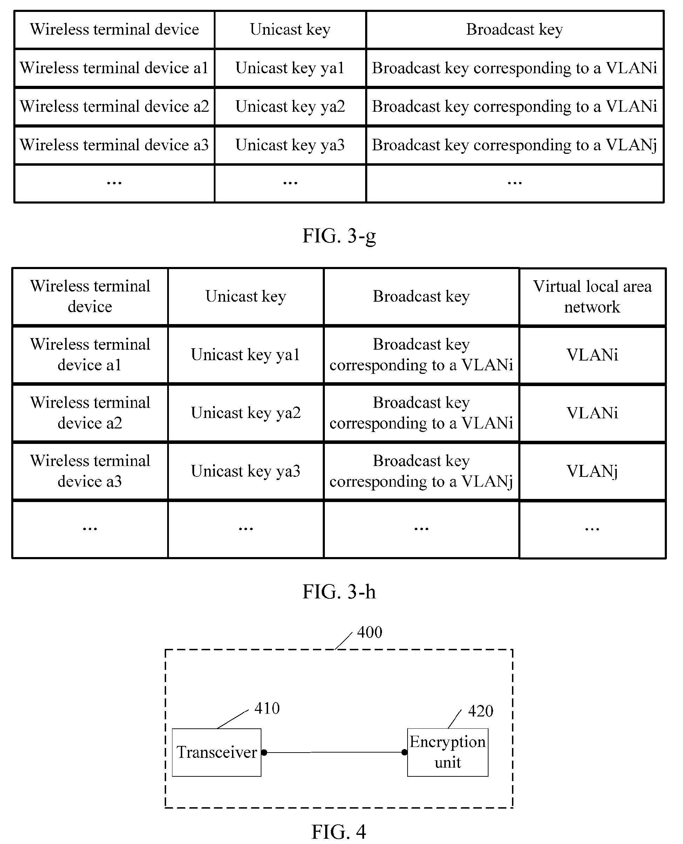

FIG. 3-b is a schematic diagram of a network architecture according to an embodiment of the present invention;
FIG. 3-c is a schematic diagram of another network architecture according to an embodiment of the present invention;
FIG. 3-d to FIG. 3-h are schematic diagrams of several mapping relationship tables according to an embodiment of the present invention;
FIG. 4 is a schematic structural diagram of an AP according to an embodiment of the present invention;

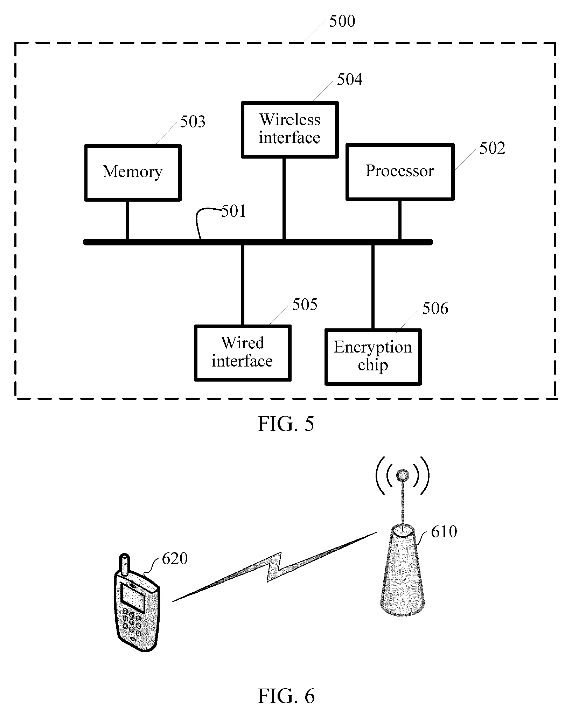

FIG. 5 is a schematic structural diagram of another AP according to an embodiment of the present invention; and
FIG. 6 is a schematic diagram of a communications system according to an embodiment of the present invention.

### DESCRIPTION OF EMBODIMENTS

Embodiments of the present invention provide a frame transfer method, a related apparatus, and a communications system, to reduce complexity of implementing VLAN isolation between wireless terminals in a WLAN and reduce frame forwarding load of an AP.

To make a person skilled in the art better understand the solutions in the present invention, the following clearly describes the technical solutions in the embodiments of the present invention with reference to the accompanying drawings in the embodiments of the present invention.

Detailed descriptions are provided below separately.

In the specification, claims, and drawings of the present invention, the terms "first", "second", "third", "fourth", and the like are intended to distinguish between different objects, but are not intended to describe a specific order. Moreover, the terms "include", "having", and any other variations mean to cover a non-exclusive inclusion, for example, a process, method, system, product, or device that includes a series of steps or units is not limited to those listed steps or units, but optionally further includes steps or units not expressly listed, or optionally further includes other steps or units inherent in the process, method, system, product, or device.

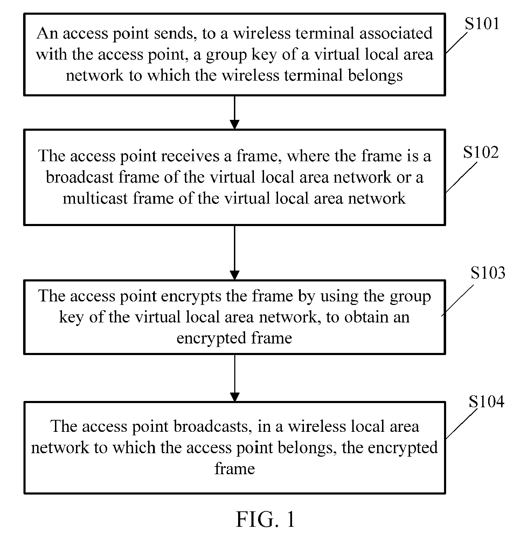

Referring to FIG. 1 first, FIG. 1 is a schematic flowchart of a frame transfer method according to an embodiment of the present invention. As shown in FIG. 1, the method may include:
S101: An AP sends, to a wireless terminal associated with the AP, a group key of a virtual local area network to which the wireless terminal belongs.

The wireless terminal, as a STA, can be associated with the AP. The wireless terminal can actively initiate an association process, so as to be associated with the AP.

For example, the wireless terminal may be a mobile phone, a tablet computer, a notebook computer, a wearable device (such as a smartwatch, a smart band, or a pedometer), or another device having a wireless local area network access capability.

After the wireless terminal is associated with the AP, the wireless terminal may access, by using the AP, a wired network, a wireless network, or the like that is connected to the AP, where the foregoing wireless network may be, for example, a microwave network or a WLAN mesh (English: mesh) network.

The AP may send, to the wireless terminal associated with the access point by using an Extensible Authentication Protocol over LAN-KEY (English: Extensible Authentication Protocol over LAN-KEY, EAPOL-KEY for short) message, a Group Key Handshake (English: Group Key Handshake) message, or another message, the group key of a virtual local area network to which the wireless terminal belongs. In this embodiment of the present invention, it is not specifically limited which type of message is specifically used by the AP to send, to the wireless terminal associated with the access point, the group key of the virtual local area network to which the wireless terminal belongs.

In a case in which multiple wireless terminals associated with the AP separately belong to different VLANs, the AP creates different group keys for the different VLANs. Specifically, for example, the AP may create different group master keys (English: group master key, GMK for short) for the different VLANs, deduce group temporal keys (English: group temporal key, GTK for short) of the different VLANs using respective GMKs, and separately send, by using an EAPOL-KEY message or a group key handshake message, respective GTKs to the wireless terminals belonging to the different VLANs. The AP may periodically update a GTK, and send an updated GTK to a corresponding wireless terminal by using a group key handshake message.

The AP may further send a unicast key to the wireless terminal, and the wireless terminal may further receive the unicast key sent by the AP. For example, the unicast key is a pairwise transient key (English: pairwise transient key, PTK for short). For a unicast frame sent by the AP to the wireless terminal, the wireless terminal may decrypt the received encrypted unicast frame by using the unicast key. For example, the wireless terminal may determine, according to a receiver address (English: receiver address, RA for short) in an address 1 (English: address 1) field of the received frame, whether a received frame is a broadcast frame, a multicast frame, or a unicast frame, and if the frame is a broadcast frame or a multicast frame, the wireless terminal decrypts the frame by using a group key. The AP may further create different unicast keys for different wireless terminals associated with the AP.

S102: The AP receives a frame of the VLAN.

The frame is a broadcast frame of the VLAN or a multicast frame of the VLAN.

The AP may receive the broadcast frame or the multicast frame of the VLAN from a router, a network switch, or another device of a wired network by using a wired Ethernet port. Alternatively, the AP may also receive the broadcast frame or the multicast frame of the VLAN from another AP or another device in a wireless network by using a wireless port.

The frame further includes a VLAN identifier (English: VLAN identifier, VID for short) of the VLAN. If the frame is an Ethernet frame, the VID may be located in a VLAN tag control information (English: Tag Control Information, TCI for short) field of the frame. The AP may determine, according to the VID in the frame, the VLAN to which the frame belongs.

S103: The AP encrypts the frame by using the group key of the VLAN, to obtain an encrypted frame.

Optionally, in some possible implementation manners of the present invention, the encrypting the frame by using the group key of the VLAN, to obtain an encrypted frame includes:
after the VLAN identifier, which is carried in the frame, of the VLAN is removed,
encrypting the frame by using the group key of the VLAN, to obtain the encrypted frame.

Before encrypting the frame, the AP converts the frame into a WLAN frame, and then encrypts the WLAN frame in a WLAN encryption manner, to obtain the encrypted frame.

S104: The AP sends, in a WLAN to which the AP belongs, the encrypted frame.

A destination address of the frame received by the AP is the same as that of the encrypted frame sent by the AP in the WLAN to which the AP belongs. That is, the destination address of the encrypted frame is also a broadcast address or a multicast address.

Correspondingly, if the wireless terminal receives the foregoing encrypted frame sent by the AP in the WLAN to which the AP belongs, the wireless terminal may decrypt the encrypted frame by using the group key of the VLAN. Because the wireless terminal has previously obtained the group key, which is sent by the AP, of the VLAN, the wireless terminal can succeed in decryption if the wireless terminal decrypts the encrypted frame by using the group key, which is sent by the AP, of the VLAN.

If there is another wireless terminal that is in the WLAN to which the AP belongs and is grouped into the VLAN, if the another wireless terminal also has previously obtained the group key, which is sent by the AP, of the VLAN, the another wireless terminal may also succeed in decrypting a received encrypted frame in a similar manner.

Optionally, in some possible implementation manners of the present invention, there are multiple wireless terminals associated with the access point, and the multiple wireless terminals include the wireless terminal and another wireless terminal, where the wireless terminal and the another wireless terminal belong to different virtual local area networks, and the method further includes: sending, by the access point to the another wireless terminal associated with the access point, another group key of a virtual local area network to which the another wireless terminal belongs; receiving, by the access point, another frame, where the another frame is a broadcast frame of the virtual local area network to which the another wireless terminal belongs or a multicast frame of the virtual local area network to which the another wireless terminal belongs; encrypting, by the access point, the another frame by using the group key of the virtual local area network to which the another wireless terminal belongs, to obtain another encrypted frame; and sending, by the access point and in the wireless local area network of the access point, the another encrypted frame.

It can be seen that, in a case in which different VLANs have different group keys, even if a frame broadcast manner (that is, the destination address of the encrypted frame is the broadcast address or the multicast address) instead of a frame unicast manner is used, the AP can also implement, based on the foregoing mechanism, broadcast frame isolation or multicast frame isolation between wireless terminals belonging to different VLANs. That is, VLAN isolation between wireless terminals in a WLAN can be implemented based on the foregoing mechanism.

Optionally, the encrypting the frame by using the group key of the VLAN, to obtain an encrypted frame may include: encrypting, based on a Counter Mode with Cipher Block Chaining-Message Authentication Code Protocol (English: Counter Mode with Cipher Block Chaining-Message Authentication Code Protocol, CCMP for short) algorithm or another encryption algorithm, the broadcast frame by using the group key of the VLAN, to obtain an encrypted broadcast frame.

It can be seen that, in the technical solution of this embodiment, an AP first sends, to an associated wireless terminal, a group key of a VLAN to which the wireless terminal belongs; and when the AP receives a broadcast frame or a multicast frame of the VLAN, the AP encrypts the broadcast frame or the multicast frame by using the group key of the VLAN, to obtain an encrypted frame, and broadcasts, in a WLAN to which the AP belongs, the encrypted frame. The AP sends, to wireless terminals in the WLAN, group keys of VLANs to which the wireless terminals belong, and different VLANs have different group keys; therefore, broadcast frame isolation or multicast frame isolation between the wireless terminals belonging to the different VLANs can also be successfully implemented even if the AP broadcasts, in the WLAN, encrypted frames that are obtained by encrypting by using the corresponding group keys. That is, the foregoing solution helps reduce complexity of implementing VLAN isolation between the wireless terminals in the WLAN and helps reduce frame forwarding load of the AP.

For better understanding and implementation of the foregoing solution of the embodiment of the present invention, related technologies are introduced below with reference to some specific application scenarios.

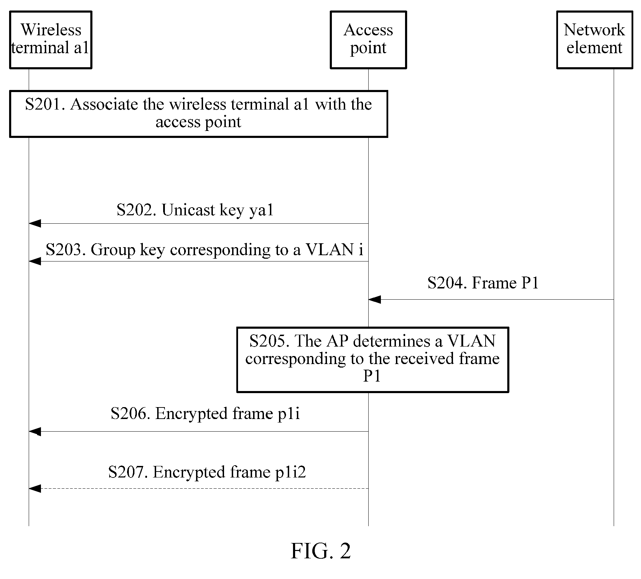

Referring to FIG. 2, FIG. 2 is a schematic flowchart of another frame transfer method according to another embodiment of the present invention. As shown in FIG. 2, the method may include:
S201: Associate a wireless terminal al with an AP.

The wireless terminal a1, as a STA, can be associated with the AP. The wireless terminal a1 can actively initiate an association process, so as to be associated with the AP.

The wireless terminal a1 mentioned in this embodiment of the present invention is, for example, a mobile phone, a tablet computer, a notebook computer, a wearable device (such as a smartwatch, a smart band, or a pedometer), or another wireless terminal having a WLAN access capability.

The wireless terminal a1 may be any wireless terminal or a particular wireless terminal associated with the AP.

The AP or a controller or another control device may group, based on a preset VLAN grouping policy, the wireless terminal a1 into a VLAN.

Optionally, in some possible implementation manners of the present invention, the VLAN grouping policy may be determined based on network planning and/or a service requirement.

For example, the VLAN grouping policy may be determined based on a VLAN load balancing principle. Specifically, for example, multiple VLANs may be configured for the AP, and all wireless terminals associated with the AP may be relatively evenly distributed in these VLANs, to achieve an objective of narrowing down a broadcast domain, and the like.

For another example, the VLAN grouping policy may be determined based on a user identity type. That is, wireless terminals of different user identity types may be grouped into different VLANs. Specifically, for example, a wireless terminal of a common office user may be grouped into a VLAN 10, where the wireless terminal in the VLAN 10 may be, for example, allowed to access intranet resources such as an internal server and device of an enterprise, and the wireless terminal in the VLAN 10 is not allowed to access the Internet (English: Internet); a wireless terminal, a visitor of the enterprise, is grouped into a VLAN 20, where the wireless terminal in the VLAN 20 is allowed to access the Internet but is not allowed to access the intranet resources; in addition, a wireless terminal of an advanced office user may be grouped into a VLAN 30, where the wireless terminal in the VLAN 30 is allowed to access all the intranet resources such as the internal server and device of the enterprise, and the wireless terminal in the VLAN 30 is further allowed to access the Internet; and so on.

For another example, the VLAN grouping policy may be determined according to a device type. That is, wireless terminals of different device types may be grouped into different VLANs, and wireless terminals of a same device type may be grouped into a same VLAN. Specifically, for example, an IP telephone terminal device is grouped into a VLAN 10, and the AP may ensure, to a greatest extent possible, that a voice service in the VLAN 10 is processed with a high priority, so as to reduce a delay. A wireless terminal of another type such as a notebook computer is grouped into a VLAN 20, where the AP processes service traffic in the VLAN 20 with a relatively low priority.

It is understandable that, the VLAN grouping policy in an actual application is not limited to the foregoing examples, for example, the foregoing several policies may be combined, or another feasible VLAN grouping policy is selected, which is not limited in this embodiment of the present invention.

It is assumed below that the wireless terminal a1 is grouped into a VLAN i.

S202: The AP may send a unicast key ya1 to the wireless terminal a1.

The AP may create different unicast keys for different wireless terminals in a WLAN to which the AP belongs.

S203: The AP may send, to the wireless terminal a1, a Group Key Handshake message 1 including a group key of the VLAN i to which the wireless terminal a1 belongs.

That is, the AP may send the group key of the VLAN i to the wireless terminal a1 by using the Group Key Handshake message 1.

Further, the wireless terminal a1 may further send, to the AP, a Group Key Handshake message 2 in response to the Group Key Handshake message 1, to indicate that the wireless terminal a1 already receives the Group Key Handshake message 1 sent by the AP to the wireless terminal a1. Certainly, the wireless terminal a1 may also not send, to the AP, the Group Key Handshake message 2 in response to the Group Key Handshake message 1, that is, the Group Key Handshake message 2 may be omitted.

The group key of the VLAN i is different from a group key of another VLAN.

Optionally, a wireless frame that is used by the AP to send a group key to a wireless terminal may be encrypted by using a unicast key of the wireless terminal. In addition, the AP may also send the unicast key and the group key of the VLAN i to the wireless terminal a1 by using a same message. In addition, when the group key of the VLAN i is updated, the AP may send, to the wireless terminal a1, a Group Key Handshake message 1 including an updated group key corresponding to the VLAN i.

S204: The AP receives a frame P1 from a wired network or a wireless network.

It may be considered that the frame P1 is any one frame received by the AP from the wired network or the wireless network.

After the AP receives the frame from the network, for a unicast frame, the unicast frame may be encrypted by using a unicast key and then an encrypted unicast frame is sent to the wireless terminal; and for a broadcast frame or a multicast frame, the broadcast frame or the multicast frame is encrypted by using a group key corresponding to a corresponding VLAN and then an encrypted broadcast frame or multicast frame is sent by using an air interface. A source network from which a frame is received may be a wired network (corresponding to a wired link) and a wireless network (corresponding to a wireless link).

If the frame P1 is a broadcast frame or a multicast frame of a VLAN, step S205 is performed.

If the frame P1 is a unicast frame of the wireless terminal a1, step S207 is performed.

S205: If the frame P1 is a broadcast frame or a multicast frame of a VLAN, the AP determines the VLAN corresponding to the received frame P1.

The AP may determine, according to a VLAN tag carried by the received frame P1, the VLAN corresponding to the frame P1. That is, different VLANs correspond to different VLAN tags. Alternatively, the AP may also determine, according to a network element sending the frame P1, the VLAN corresponding to the frame P1. For example, as exemplarily shown in FIG. 3-c, a gateway GW1 belongs to the VLAN i, and a gateway GW2 belongs to a VLAN j; therefore, for the frame P1 of a VLAN received from the gateway GW1, the AP may determine that the frame P1 is a broadcast frame or a multicast frame of the VLAN i, and if the frame P1 of a VLAN is received from the gateway GW2, the AP determines that the frame P1 is a broadcast frame or a multicast frame of the VLAN j; and so on.

Certainly, the AP may also determine, in another manner, a VLAN corresponding to the received frame P1.

If the AP determines that the VLAN corresponding to the foregoing received frame P1 is the VLAN i, step S206 is performed.

S206: After a VLAN tag, which is carried in the frame P1, of the VLAN i is removed, the AP encrypts the frame P1 by using the group key of the VLAN i, to obtain an encrypted frame P1i. The AP sends, in the WLAN to which the AP belongs, the encrypted frame P1i.

Before encrypting the frame P1, the AP converts the frame P1 into a WLAN frame, and then encrypts the WLAN frame in a WLAN encryption manner, to obtain the encrypted frame P1i.

It is found in a practice process that, removing the VLAN tag carried by the frame can make a corresponding wireless terminal almost not perceive existence of a VLAN. That the wireless terminal does not perceive the existence of the VLAN helps simplify processing logic of the wireless terminal.

If the frame P1 received by the AP is a broadcast frame or a multicast frame, a destination address of the frame P1 is the same as that of the encrypted frame P1i sent by the AP in the WLAN to which the AP belongs. That is, the destination address of the encrypted frame is also a broadcast address or a multicast address.

Optionally, the encrypting, by the AP, the frame P1 by using the group key of the VLAN i, to obtain an encrypted frame P1i may include: encrypting the frame P1 based on a Counter Mode with Cipher Block Chaining-Message Authentication Code Protocol algorithm or another encryption algorithm by using the group key of the VLAN i, to obtain the encrypted frame P1i.

If the AP broadcasts, in the WLAN to which the AP belongs, the encrypted frame P1i, all wireless terminals including the wireless terminal a1 in the WLAN may receive the encrypted frame P1i. The wireless terminal a1 can decrypt the encrypted frame P1i by using the group key of the VLAN i. It is understandable that, because the wireless terminal a1 has previously obtained the group key, which is sent by the AP, of the VLAN i, the wireless terminal a1 can succeed in decryption if the wireless terminal a1 decrypts the encrypted frame P1i by using the group key, which is sent by the AP, of the VLAN i.

Certainly, for another wireless terminal (if there is one) that is in the WLAN to which the AP belongs and is grouped into the VLAN i, if the another wireless terminal has also previously obtained the group key, which is sent by the AP, of the VLAN i, the another wireless terminal can also succeed in decrypting the received encrypted frame P1i in a similar manner. In addition, for another wireless terminal (if there is one) that is in the WLAN to which the AP belongs and has not obtained the group key of the VLAN i, for example, if there is further a wireless terminal b in the WLAN to which the AP belongs, it is assumed that the wireless terminal b has previously obtained a group key, which is sent by the AP, of the VLAN j (that is, the wireless terminal b is grouped into the VLAN j, and certainly, another one or more wireless terminals may also be grouped into the VLAN j), but the wireless terminal b has not previously obtained the group key, which is sent by the AP, of the VLAN i, when the wireless terminal b receives the encrypted frame P1i broadcast by the AP in the WLAN to which the AP belongs, the wireless terminal b decrypts the encrypted frame P1i by using the group key of the VLAN j, and because the group key is not matched, the wireless terminal b certainly cannot succeed in decryption if the wireless terminal b decrypts the encrypted broadcast frame by using the group key, which is sent by the AP, of the VLAN j. It can be seen that, when different VLANs have different group keys, even if a frame unicast manner instead of a frame broadcast manner is used, the AP can also implement, based on the foregoing mechanism, broadcast frame isolation or multicast frame isolation between wireless terminals belonging to different VLANs. That is, VLAN isolation between wireless terminals in a WLAN can also be implemented based on the foregoing mechanism.

S207: The AP encrypts the frame P1 by using the unicast key corresponding to the wireless terminal a1, to obtain an encrypted frame P1i2; the AP sends the encrypted frame P1i2 to the wireless terminal a1.

After receiving the encrypted frame P1i2, the wireless terminal a1 decrypts the encrypted unicast frame by using the unicast key ya1 of the wireless terminal a1. It is understandable that, because the wireless terminal a1 has previously obtained the unicast key ya1 sent by the AP, the unicast key is matched, and the wireless terminal a1 can successfully decrypt the encrypted unicast frame P1i2 by decrypting the encrypted frame P1i2 by using the unicast key ya1 sent by the AP.

All unicast frames for handshakes between the AP and the wireless terminal a1 can be encrypted by using the unicast key ya1 and then are sent in a unicast manner, for example, the wireless terminal a1 may also encrypt the unicast frame by using the unicast key ya1, and then send an encrypted unicast frame to the AP in a unicast manner.

It can be seen that, in the solution of this embodiment, an AP first sends, to an associated wireless terminal, a group key of a VLAN i to which the wireless terminal belongs; and when the AP receives a broadcast frame or a multicast frame of the VLAN i, the AP encrypts the broadcast frame or the multicast frame by using the group key of the VLAN i, to obtain an encrypted frame, and then broadcasts, in a WLAN to which the AP belongs, the encrypted frame by using an air interface. The AP sends, to wireless terminals in the WLAN, group keys of VLANs to which the wireless terminals belong, and different VLANs have different group keys; therefore, broadcast frame isolation or multicast frame isolation between the wireless terminals belonging to the different VLANs can also be successfully implemented even if the AP sends, in the WLAN, single encrypted frame that is obtained by encrypting by using the corresponding group key. That is, the foregoing solution helps reduce complexity of implementing VLAN isolation between the wireless terminals in the WLAN and helps reduce frame forwarding load of the AP.

Referring to FIG. 3-a and FIG. 3-b, FIG. 3-a is a schematic flowchart of a frame transfer method according to an embodiment of the present invention. The frame transfer method exemplarily shown in FIG. 3-a may be specifically implemented based on a network architecture shown in FIG. 3-b. As shown in FIG. 3-a, another frame transfer method according to another embodiment of the present invention may include:
S301: Associate a wireless terminal a1 with an AP.
S302: Associate a wireless terminal a2 with the AP.
S303: Associate a wireless terminal a3 with the AP.

It is understandable that, there is no inevitable sequence among steps S301, S302 and S303.

The wireless terminal a1, the wireless terminal a2, and the wireless terminal a3, as STAs, can be associated with the AP. The wireless terminal a1, the wireless terminal a2, and the wireless terminal a3 may initiate actively association processes, so as to be associated with the AP.

The wireless terminal (such as the wireless terminal a1, the wireless terminal a2, and the wireless terminal a3) mentioned in this embodiment of the present invention may be, for example, a mobile phone, a tablet computer, a notebook computer, a wearable device (such as a smartwatch, a smart band, or a pedometer), or another wireless terminal having a WLAN access capability.

The wireless terminal a1, the wireless terminal a2, and the wireless terminal a3 may be any three wireless terminals or three particular wireless terminals associated with the AP.

The AP or a controller or another control device may group, based on a preset VLAN grouping policy, the wireless terminal a1 into a VLAN.

Optionally, in some possible implementation manners of the present invention, the VLAN grouping policy may be determined based on network planning and/or a service requirement.

For example, the VLAN grouping policy may be determined based on a VLAN load balancing principle. Specifically, for example, multiple VLANs may be configured for the AP, and all wireless terminals associated with the AP may be relatively evenly distributed in these VLANS, to achieve an objective of narrowing down a broadcast domain.

For another example, the VLAN grouping policy may be determined based on a user identity type. That is, wireless terminals of different user identity types may be grouped into different VLANs. Specifically, for example, a wireless terminal of a common office user may be grouped into a VLAN 10, where the wireless terminal in the VLAN 10 may be allowed to access intranet resources such as an internal server and device of an enterprise, and the wireless terminal in the VLAN 10 is not allowed to access the Internet; a wireless terminal of a visitor of the enterprise is grouped into a VLAN 20, where the wireless terminal in the VLAN 20 is allowed to access the Internet but is not allowed to access the intranet resources; and a wireless terminal of an advanced office user may be grouped into a VLAN 30, where the wireless terminal in the VLAN 30 is allowed to access all the intranet resources such as the internal server and device of the enterprise, and the wireless terminal in the VLAN 30 may be further allowed to access the Internet; and so on.

For another example, the VLAN grouping policy may be determined according to a device type. That is, wireless terminals of different device types may be grouped into different VLANs, and wireless terminals of a same device type may be grouped into a same VLAN. Specifically, for example, an IP telephone terminal device is grouped into a VLAN 10, and the AP may ensure, to a greatest extent possible, that a voice service in the VLAN 10 is processed with a high priority, so as to reduce a delay. A wireless terminal of another type such as a notebook computer is grouped into a VLAN 20, where the AP processes service traffic in the VLAN 20 with a relatively low priority.

It is understandable that, the VLAN grouping policy in an actual application is not limited to the foregoing examples. For example, the foregoing several policies may be combined, or another feasible VLAN grouping policy is selected, which is not limited in this embodiment of the present invention.

It is assumed below that the wireless terminal a1 and the wireless terminal a2 are grouped into a VLAN i (that is, the wireless terminal a1 and the wireless terminal a2 are grouped into a same VLAN), and that the wireless terminal a3 is grouped into a VLAN j.

Further, the AP may further maintain a mapping relationship table f1, where the mapping relationship table f1 is used to record a mapping relationship between a wireless terminal and a VLAN. The mapping relationship table f1 may be, for example, exemplarily shown in FIG. 3-d. S304: The AP sends a group key of VLAN i to the wireless terminal a1 and the wireless terminal a2. S305: The AP further sends a group key of VLAN j to the wireless terminal a3.

The group key of the VLAN i is different from the group key of the VLAN j.

It is understandable that, there is no inevitable sequence between step S304 and step S305.

Further, the AP may further maintain a mapping relationship table f2, where the mapping relationship table f2 is used to record a mapping relationship between a wireless terminal and a group key. The mapping relationship table f2 may be, for example, exemplarily shown in FIG. 3-e. Optionally, the AP may further separately send a unicast key to the wireless terminal a1, the wireless terminal a2, and the wireless terminal a3, and the wireless terminal a1, the wireless terminal a2, and the wireless terminal a3 may further receive the unicast key sent by the AP. The AP may create different unicast keys for different wireless terminals in a WLAN to which the AP belongs. That is, the unicast keys sent by the AP separately to the wireless terminal a1, the wireless terminal a2, and the wireless terminal a3 are different from each other. For example, for the unicast frame sent by the AP to the wireless terminal a1, the wireless terminal a1 may decrypt a received encrypted unicast frame by using the received unicast key, and a processing manner of another wireless terminal is similar to this.

Further, the AP may further maintain a mapping relationship table f3, where the mapping relationship table f3 is used to record a mapping relationship between a wireless terminal and a unicast key. The mapping relationship table f2 may be, for example, exemplarily shown in FIG. 3-f. Further, the mapping relationship table f3 and the mapping relationship table f2 may be combined as one table, for example, may be combined as a mapping relationship table f4 exemplarily shown in FIG. 3-g. Further, the mapping relationship table f3, the mapping relationship table f1, and the mapping relationship table f2 may also be combined as one table, for example, may be combined as a mapping relationship table f5 exemplarily shown in FIG. 3-h. Certainly, this embodiment is not limited to the exemplarily shown manners of combining mapping relationship tables, and the mapping relationship tables may be combined or split as required.

S306: If the AP receives a frame P1 of a VLAN from a network, where the frame P1 is a broadcast frame or a multicast frame, the AP determines the VLAN corresponding to the received frame P1.

It may be considered that the foregoing frame P1 is any one broadcast frame or multicast frame of the VLAN received by the AP from the network.

The AP may determine, according to a VLAN tag carried by the received frame P1, the VLAN corresponding to the broadcast frame P1. That is, different VLANs correspond to different VLAN tags. Alternatively, the AP may also determine, according to a network element sending the frame P1, the VLAN corresponding to the frame P1. For example, as exemplarily shown in FIG. 3-c, a gateway GW1 belongs to the VLAN i, and a gateway GW2 belongs to the VLAN j. Therefore, for the frame P1 of a VLAN received from the gateway GW1, the AP may determine that the frame P1 is a frame of the VLAN i, and if the frame P1 of a VLAN is received from the gateway GW2, the AP may determine that the frame P1 is a frame of the VLAN j; and so on.

Certainly, the AP may also determine, in another manner, a VLAN corresponding to the received frame P1.

If the AP determines that the VLAN corresponding to the received frame P1 is the VLAN i, step S307 is performed. If the AP determines that the VLAN corresponding to the received frame P1 is the VLAN j, step S308 is performed.

S307: After a VLAN tag of the VLAN i is removed from the frame P1, the AP encrypts the frame P1 by using the group key of the VLAN i, to obtain an encrypted frame P1i. The AP sends, in a WLAN to which the AP belongs, the encrypted frame P1i by using an air interface.

It is found in a practice process that, removing the VLAN tag carried by the broadcast frame can make a corresponding wireless terminal almost not perceive existence of a VLAN. That the wireless terminal does not perceive the existence of the VLAN helps simplify processing logic of the wireless terminal.

Before encrypting the frame P1, the AP converts the frame P1 into a WLAN frame, and then encrypts the WLAN frame in a WLAN encryption manner, to obtain the encrypted frame P1i.

A destination address of the frame P1 received by the AP is the same as that of the encrypted frame P1i sent by the AP in the WLAN to which the AP belongs. That is, the destination address of the encrypted frame is also a broadcast address or a multicast address.

Optionally, the encrypting, by the AP, the frame P1 by using the group key of the VLAN i, to obtain an encrypted broadcast frame P1i may include: encrypting the frame P1 based on a Counter Mode with Cipher Block Chaining-Message Authentication Code Protocol algorithm or another encryption algorithm by using the group key of the VLAN i, to obtain the encrypted frame P1i.

If the AP broadcasts, in the WLAN to which the AP belongs, the encrypted frame P1i, all of the wireless terminal a1, the wireless terminal a2, and the wireless terminal a3 may receive the encrypted frame P1i. The wireless terminal a1 and the wireless terminal a2 decrypt the encrypted frame by using the group key of the VLAN i. It is understandable that, because the wireless terminal a1 and the wireless terminal a2 have previously obtained the group key, which is sent by the AP, of the VLAN i, the wireless terminal a1 and the wireless terminal a2 can succeed in decryption if the wireless terminal a1 and the wireless terminal a2 decrypt the encrypted frame P1i by using the group key, which is sent by the AP, of the VLAN i. The wireless terminal a3 decrypts the encrypted frame P1i by using the previously obtained group key, which is sent by the AP, of the VLAN j. Because the group key is not matched, the wireless terminal a3 cannot succeed in decryption, and the wireless terminal a3 may discard the encrypted frame P1i.

S308: After a VLAN tag of the VLAN j is removed from the frame P1, the AP encrypts the frame P1 by using the group key of the VLAN j, to obtain an encrypted frame P1j. The AP broadcasts, in a WLAN to which the AP belongs, the encrypted frame P1j by using an air interface.

A destination address of the frame P1 received by the AP is the same as that of the encrypted frame P1j sent by the AP in the WLAN to which the AP belongs. That is, the destination address of the encrypted frame is also a broadcast address or a multicast address.

Optionally, the encrypting, by the AP, the frame by using the group key of the VLAN j, to obtain an encrypted frame P1j may include: encrypting the frame based on a Counter Mode with Cipher Block Chaining-Message Authentication Code Protocol or another encryption algorithm by using the group key of the VLAN j, to obtain the encrypted frame P1j.

If the AP broadcasts, in the WLAN to which the AP belongs, the encrypted frame P1j, all of the wireless terminal a1, the wireless terminal a2, and the wireless terminal a3 may receive the encrypted frame P1j. The wireless terminal a1 and the wireless terminal a2 may decrypt the encrypted frame by using the group key of the VLAN j. It is understandable that, because the wireless terminal a1 and the wireless terminal a2 have previously obtained the group key, which is sent by the AP, of the VLAN i, and the group key is not matched, the wireless terminal a1 and the wireless terminal a2 cannot succeed in decryption if the wireless terminal a1 and the wireless terminal a2 decrypt the encrypted frame P1j by using the group key, which is sent by the AP, of the VLAN i. Therefore, the wireless terminal a1 and the wireless terminal a2 may discard the encrypted broadcast frame P1j. The wireless terminal a3 decrypts the encrypted frame P1j by using the previously obtained group key, which is sent by the AP, of the VLAN j. Because the group key is matched, the wireless terminal a3 can succeed in decryption.

It can be seen that, when different VLANs have different group keys, even if a frame unicast manner instead of a frame broadcast manner is used, the AP can also implement, based on the foregoing mechanism, broadcast frame isolation or multicast frame isolation between wireless terminals belonging to different VLANs. That is, VLAN isolation between wireless terminals in a WLAN can also be implemented based on the foregoing mechanism.

It can be seen that, in the technical solution of this embodiment, an AP first sends, to an associated wireless terminal, a group key of a VLAN i to which the wireless terminal belongs; and when the AP receives a broadcast frame or a multicast frame of the VLAN i, the AP encrypts the broadcast frame or the multicast frame by using the group key of the VLAN i, to obtain an encrypted frame, and broadcasts, in a WLAN to which the AP belongs, the encrypted frame by using an air interface. The AP sends, to wireless terminals in the WLAN, group keys of VLANs to which the wireless terminals belong, and different VLANs have different group keys; therefore, broadcast frame isolation or multicast frame isolation between the wireless terminals belonging to the different VLANs can also be successfully implemented even if the AP sends, in the WLAN, single encrypted frame that is obtained by encrypting by using the corresponding group key. That is, the foregoing solution helps reduce complexity of implementing VLAN isolation between the wireless terminals in the WLAN and helps reduce frame forwarding load of the AP.

Related apparatuses for implementing the foregoing solutions are further provided below: Referring to FIG. 4, an access point 400 according to an embodiment of the present invention may include: a transceiver 410 and an encryption unit 420.

The transceiver 410 is configured to send, to a wireless terminal associated with the access point 400, a group key of a virtual local area network to which the wireless terminal belongs; and receive a frame, where the frame is a broadcast frame of the virtual local area network or a multicast frame of the virtual local area network.

The encryption unit 420 is configured to encrypt the frame by using the group key of the virtual local area network, to obtain an encrypted frame.

The transceiver 410 is further configured to send, in a wireless local area network of the access point 400, the encrypted frame.

A destination address of the frame received by the transceiver 410 is the same as that of the encrypted frame sent by the transceiver 410 in the WLAN to which the AP belongs. That is, the destination address of the encrypted frame is also a broadcast address or a multicast address. Optionally, the frame includes a virtual local area network identifier of the virtual local area network. The encryption unit 420 is specifically configured to: after the virtual local area network identifier is removed from the frame, encrypt the frame by using the group key, to obtain the encrypted frame.

Optionally, in the aspect of sending, to a wireless terminal associated with the access point, a group key of a virtual local area network to which the wireless terminal belongs, the transceiver 420 is specifically configured to send, to the wireless terminal by using a group key handshake message, the group key of the virtual local area network to which the wireless terminal belongs.

Optionally, there are multiple wireless terminals associated with the access point, and the multiple wireless terminals include the wireless terminal and another wireless terminal, where the wireless terminal and the another wireless terminal belong to different virtual local area networks.

The transceiver 410 is further configured to send, to the another wireless terminal associated with the access point, another group key of a virtual local area network to which the another wireless terminal belongs; and receive another frame, where the another frame is a broadcast frame of the virtual local area network to which the another wireless terminal belongs or a multicast frame of the virtual local area network to which the another wireless terminal belongs.

The encryption unit 420 is further configured to encrypt the another frame by using the group key of the virtual local area network to which the another wireless terminal belongs, to obtain another encrypted frame.

The transceiver 410 is further configured to send, in the wireless local area network of the access point, the another encrypted frame.

It is understandable that, functions of function modules of the access point 400 in this embodiment may be specifically implemented according to the methods in the foregoing method embodiments. For a specific implementation process thereof, reference may be made to relevant descriptions in the foregoing method embodiments, and details are not provided herein again.

It can be seen that, in the technical solution of this embodiment, the AP 400 first sends, to an associated wireless terminal, a group key of a VLAN to which the wireless terminal belongs; and when the AP receives a broadcast frame or a multicast frame of the VLAN, the AP encrypts the broadcast frame or the multicast frame by using the group key of the VLAN, to obtain an encrypted frame, and broadcasts, in a WLAN to which the AP belongs, the encrypted frame. The AP sends, to wireless terminals in the WLAN, group keys of VLANs to which the wireless terminals belong, and different VLANs have different group keys; therefore, broadcast frame isolation or multicast frame isolation between the wireless terminals belonging to the different VLANs can also be successfully implemented even if the AP sends, in the WLAN, single encrypted frame that is obtained by encrypting by using the corresponding group key. That is, the foregoing solution helps reduce complexity of implementing VLAN isolation between the wireless terminals in the WLAN and helps reduce frame forwarding load of the AP.

FIG. 5 is a schematic structural diagram of an access point 500 according to the present invention. As shown in FIG. 5, the access point 500 in this embodiment includes a processor 502, a memory 503, a wireless interface 504, a wired interface 505, and an encryption processing chip 506. The processor 502 may be connected to the memory 503, the wireless interface 504, the wired interface 505, and the encryption processing chip 506 by using a bus 501 or another structure.

The processor 502 may be a central processing unit (English: central processing unit, CPU for short) or a combination of a CPU and another chip. The memory 503 may include a volatile memory (English: volatile memory), such as a random-access memory (English: random-access memory, RAM for short); the memory 503 may also include a non-volatile memory (English: non-volatile memory), such as a read-only memory (English: read-only memory, ROM for short), a flash memory (English: flash memory), a hard disk drive (English: hard disk drive, HDD for short), or a solid-state drive (English: solid-state drive, SSD for short); and the memory 503 may further include a combination of memories of the foregoing types. The memory 503 stores a VLAN to which the wireless terminal associated with the AP belongs and a group key of each VLAN. The memory 503 further stores code. The processor 502 invokes the code stored in the memory 503 to perform the following process:
sending, by using the wireless interface 504 to a wireless terminal associated with the access point 500, a group key of a virtual local area network to which the wireless terminal belongs; and receiving a frame by using the wireless interface 504 or by using the wired interface 505, where the frame is a broadcast frame of the virtual local area network or a multicast frame of the virtual local area network;
the encryption processing chip 506 being configured to encrypt the frame by using the group key of the virtual local area network, to obtain an encrypted frame; and further sending, by the processor 502 in a wireless local area network of the access point 500, the encrypted frame by using the wireless interface 504.

A destination address of the frame received by the processor 502 by using the wireless interface 504 or by using the wired interface 505 is the same as that of the encrypted frame sent, by using the wireless interface 504, by the processor 502 in the WLAN to which the AP belongs. That is, the destination address of the encrypted frame is also a broadcast address or a multicast address. Optionally, the frame includes a virtual local area network identifier of the virtual local area network.

The encryption processing chip 506 is specifically configured to: before the processor 502 removes the virtual local area network identifier in the frame, encrypt the frame by using the group key, to obtain the encrypted frame.

Optionally, in the aspect of sending, to a wireless terminal associated with the access point, a group key of a virtual local area network to which the wireless terminal belongs, the processor 502 is specifically configured to send, by using the wireless interface 504 to the wireless terminal by using a group key handshake message, the group key of the virtual local area network to which the wireless terminal belongs.

Optionally, there are multiple wireless terminals associated with the access point, and the multiple wireless terminals include the wireless terminal and another wireless terminal, where the wireless terminal and the another wireless terminal belong to different virtual local area networks.

The processor 502 is further configured to send, by using the wireless interface 504 to the another wireless terminal associated with the access point 500, another group key of a virtual local area network to which the another wireless terminal belongs; and receive another frame through the wireless interface 504 or through the wired interface 505, where the another frame is a broadcast frame of the virtual local area network to which the another wireless terminal belongs or a multicast frame of the virtual local area network to which the another wireless terminal belongs.

The encryption processing chip 506 is further configured to encrypt the another frame by using the group key of the virtual local area network to which the another wireless terminal belongs, to obtain another encrypted frame.

The processor 502 further sends, in the wireless local area network of the access point 500, the another encrypted frame by using the wireless interface 504.

It is understandable that, functions of function modules of the AP 500 in this embodiment may be specifically implemented according to the methods in the foregoing method embodiments. For a specific implementation process thereof, reference may be made to relevant descriptions in the foregoing method embodiments, and details are not provided herein again.

It can be seen that, in the technical solution of this embodiment, the AP 500 first sends, to an associated wireless terminal, a group key of a VLAN to which the wireless terminal belongs; and when the AP receives a broadcast frame or a multicast frame of the VLAN, the AP encrypts the broadcast frame or the multicast frame by using the group key of the VLAN, to obtain an encrypted frame, and broadcasts, in a WLAN to which the AP belongs, the encrypted frame. The AP sends, to wireless terminals in the WLAN, group keys of VLANs to which the wireless terminals belong, and different VLANs have different group keys; therefore, broadcast frame isolation or multicast frame isolation between the wireless terminals belonging to the different VLANs can also be successfully implemented even if the AP sends, in the WLAN, single encrypted frame that is obtained by encrypting by using the corresponding group key. That is, the foregoing solution helps reduce complexity of implementing VLAN isolation between the wireless terminals in the WLAN and helps reduce frame forwarding load of the AP.

Referring to FIG. 6, a communications system according to another embodiment of the present invention includes: an access point 610 and a wireless terminal 620.

The wireless terminal 620 is associated with the access point 610.

The access point 610 is configured to send, to the wireless terminal 620, a group key of a virtual local area network to which the wireless terminal 620 belongs; receive a frame, where the frame is a broadcast frame of the virtual local area network or a multicast frame of the virtual local area network; encrypt the frame by using the group key of the virtual local area network, to obtain an encrypted frame; and send, in a wireless local area network of the access point 610, the encrypted frame.

The wireless terminal 620 is configured to receive the group key, which is sent by the access point 610, of the virtual local area network to which the wireless terminal belongs; and receive the encrypted frame sent by the access point 610 and decrypt the encrypted frame by using the group key. If the wireless terminal 620 determines that an address 1 field in the encrypted frame is a group address, the wireless terminal 620 decrypts the encrypted frame by using the group key.

Optionally, the communications system may further include another wireless terminal, where the another wireless terminal is associated with the access point, and the wireless terminal and the another wireless terminal belong to different virtual local area networks.

The access point 610 is further configured to send, to the another wireless terminal, another group key of a virtual local area network to which the another wireless terminal belongs; receive another frame, where the another frame is a broadcast frame of the virtual local area network to which the another wireless terminal belongs or a multicast frame of the virtual local area network to which the another wireless terminal belongs; encrypt the another frame by using the group key of the virtual local area network to which the another wireless terminal belongs, to obtain another encrypted frame; and send the another encrypted frame in the wireless local area network to which the access point 610 belongs.

The another wireless terminal is configured to receive the another group key sent by the access point; and receive the another encrypted frame sent by the access point, and decrypt the another encrypted frame by using the another group key.

For example, the wireless terminal may be a mobile phone, a tablet computer, a notebook computer, a wearable device (such as a smartwatch, a smart band, or a pedometer), or another device having a wireless local area network access capability.

It is understandable that, functions of the wireless terminal 620 in this embodiment may be specifically implemented according to the methods in the foregoing method embodiments. For a specific implementation process thereof, reference may be made to relevant descriptions in the foregoing method embodiments, and details are not provided herein again.

It is understandable that, functions of function modules of the access point 610 in this embodiment may be specifically implemented according to the methods in the foregoing method embodiments. For a specific implementation process thereof, reference may be made to relevant descriptions in the foregoing method embodiments, and details are not provided herein again.

It can be seen that, in the technical solution of this embodiment, after the wireless terminal 620 associated with an AP receives a group key, which is sent by the access point 610, of a VLAN to which the wireless terminal belongs, if the wireless terminal receives an encrypted frame broadcast by the AP in a WLAN to which the AP belongs, the wireless terminal may decrypt the encrypted frame by using the group key of the VLAN. It is understandable that, when the encrypted frame that is broadcast by the AP and is received by the wireless terminal is a frame corresponding to the VLAN, the wireless terminal can succeed in decrypting the encrypted frame by using the group key of the VLAN; and when the encrypted frame that is broadcast by the AP and is received by the wireless terminal is not a frame corresponding to the VLAN, if the wireless terminal has not previously obtained a group key of a corresponding VLAN, the wireless terminal cannot succeed in decrypting the encrypted frame. The AP sends, to wireless terminals in the WLAN, group keys of VLANs to which the wireless terminals belong, and different VLANs have different group keys; therefore, broadcast frame isolation or multicast frame isolation between the wireless terminals belonging to the different VLANs can also be successfully implemented even if the AP sends, in the WLAN, single encrypted frame that is obtained by encrypting by using the corresponding group key. That is, the foregoing solution helps reduce complexity of implementing VLAN isolation between the wireless terminals in the WLAN and helps reduce frame forwarding load of the AP.

It should be noted that, for brief description, the foregoing method embodiments are represented as a series of action combinations. However, a person skilled in the art should appreciate that the present invention is not limited to the described order of the actions, because according to the present invention, some steps may be performed in other orders or simultaneously. In addition, a person skilled in the art should also understand that all the embodiments described in this specification belong to exemplary embodiments, and the involved actions and modules are not necessarily essential in the present invention.

In the foregoing embodiments, the description of each embodiment has respective focuses. For a part that is not described in detail in an embodiment, reference may be made to related descriptions in other embodiments.

In the several embodiments provided in this application, it should be understood that the disclosed apparatus may be implemented in other manners. For example, the described apparatus embodiment is merely exemplary. For example, the unit division is merely logical function division and may be other division in actual implementation. For example, multiple units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic or other forms.

The units described as separate parts may or may not be physically separate, and parts displayed as units may or may not be physical units, that is, may be located in one position, or may be distributed on multiple network units. Some or all of the units may be selected according to actual needs to achieve the objectives of the solutions of the embodiments.

In addition, function units in the embodiments of the present invention may be integrated into one processing unit, or each of the units may exist alone physically, or two or more units are integrated into one unit. The integrated unit may be implemented in a form of hardware, or may be implemented in a form of a software function unit.

All or some of the steps of the methods in the embodiments may be implemented by a program instructing a processor. The program may be stored in a computer-readable storage medium. Based on such an understanding, all or some of the technical solutions of the present invention may be implemented in a form of a software product. The computer software product is stored in a storage medium, and includes several instructions for instructing a computer device (which may be a personal computer, a server, or a network device) to perform all or some of the steps of the methods described in the embodiments of the present invention. The foregoing storage medium is a non-transitory (English: non-transitory) medium, such as a random access memory, read-only memory, a flash memory, a hard disk drive, a solid-state drive, a magnetic tape (English: magnetic tape), a floppy disk (English: floppy disk), an optical disc (English: optical disc), and any combination thereof.

The foregoing descriptions are merely exemplary specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A frame transfer method, comprising:
sending, by an access point to a wireless terminal associated with the access point, a group key of a virtual local area network to which the wireless terminal belongs;
receiving, by the access point, a frame, wherein the frame is a broadcast frame of the virtual local area network or a multicast frame of the virtual local area network;
encrypting, by the access point, the frame by using the group key of the virtual local area network, to obtain an encrypted frame; and
sending, by the access point and in a wireless local area network of the access point, the encrypted frame.

2. The method according to claim 1, wherein the frame comprises a virtual local area network identifier of the virtual local area network, wherein the encrypting the frame by using the group key of the virtual local area network, to obtain an encrypted frame comprises: after the virtual local area network identifier is removed from the frame, encrypting the frame by using the group key, to obtain the encrypted frame.

3. The method according to claim 1 or 2, wherein
the sending, to a wireless terminal associated with the access point, a group key of a virtual local area network to which the wireless terminal belongs comprises: sending, to the wireless terminal by using a group key handshake message, the group key of the virtual local area network to which the wireless terminal belongs.

4. The method according to any one of claims 1 to 3, wherein
there are multiple wireless terminals associated with the access point, and the multiple wireless terminals comprise the wireless terminal and another wireless terminal, wherein the wireless terminal and the another wireless terminal belong to different virtual local area networks, and the method further comprises:
sending, by the access point to the another wireless terminal associated with the access point, another group key of a virtual local area network to which the another wireless terminal belongs;
receiving, by the access point, another frame, wherein the another frame is a broadcast frame of the virtual local area network to which the another wireless terminal belongs or a multicast frame of the virtual local area network to which the another wireless terminal belongs;
encrypting, by the access point, the another frame by using the group key of the virtual local area network to which the another wireless terminal belongs, to obtain another encrypted frame; and
sending, by the access point and in the wireless local area network of the access point, the another encrypted frame.

5. An access point, comprising:
a transceiver, configured to send, to a wireless terminal associated with the access point, a group key of a virtual local area network to which the wireless terminal belongs; and receive a frame, wherein the frame is a broadcast frame of the virtual local area network or a multicast frame of the virtual local area network; and
an encryption unit, configured to encrypt the frame by using the group key of the virtual local area network, to obtain an encrypted frame, wherein
the transceiver is further configured to send, in a wireless local area network of the access point, the encrypted frame.

6. The access point according to claim 5, wherein
the frame comprises a virtual local area network identifier of the virtual local area network, wherein the encryption unit is specifically configured to: after the virtual local area network identifier is removed from the frame, encrypt the frame by using the group key, to obtain the encrypted frame.

7. The access point according to claim 5 or 6, wherein
in the aspect of sending, to a wireless terminal associated with the access point, a group key of a virtual local area network to which the wireless terminal belongs, the transceiver is specifically configured to send, to the wireless terminal by using a group key handshake message, the group key of the virtual local area network to which the wireless terminal belongs.

8. The access point according to any one of claims 5 to 7, wherein
there are multiple wireless terminals associated with the access point, and the multiple wireless terminals comprise the wireless terminal and another wireless terminal, wherein the wireless terminal and the another wireless terminal belong to different virtual local area networks, and
the transceiver is further configured to send, to the another wireless terminal associated with the access point, another group key of a virtual local area network to which the another wireless terminal belongs; and receive another frame, wherein the another frame is a broadcast frame of the virtual local area network to which the another wireless terminal belongs or a multicast frame of the virtual local area network to which the another wireless terminal belongs;
the encryption unit is further configured to encrypt the another frame by using the group key of the virtual local area network to which the another wireless terminal belongs, to obtain another encrypted frame; and
the transceiver is further configured to send, in the wireless local area network of the access point, the another encrypted frame.

9. A communications system, comprising:
an access point, configured to send, to a wireless terminal associated with the access point, a group key of a virtual local area network to which the wireless terminal belongs; receive a frame, wherein the frame is a broadcast frame of the virtual local area network or a multicast frame of the virtual local area network; encrypt the frame by using the group key of the virtual local area network, to obtain an encrypted frame; and send, in a wireless local area network of the access point, the encrypted frame; and
the wireless terminal, configured to receive the group key sent by the access point; and receive the encrypted frame sent by the access point, and decrypt the encrypted frame by using the group key of the virtual local area network.

10. The communications system according to claim 9, wherein the communications system further comprises another wireless terminal, wherein the another wireless terminal is associated with the access point, and the wireless terminal and the another wireless terminal belong to different virtual local area networks;
the access point is further configured to send, to the another wireless terminal, another group key of a virtual local area network to which the another wireless terminal belongs; receive another frame, wherein the another frame is a broadcast frame of the virtual local area network to which the another wireless terminal belongs or a multicast frame of the virtual local area network to which the another wireless terminal belongs; encrypt the another frame by using the group key of the virtual local area network to which the another wireless terminal belongs, to obtain another encrypted frame; and send, in the wireless local area network to which the access point belongs, the another encrypted frame; and
the another wireless terminal is configured to receive the another group key sent by the access point; and receive the another encrypted frame sent by the access point, and decrypt the another encrypted frame by using the another group key.
